# EUROPEAN PATENT APPLICATION

(11) **EP 3 460 424 A1**
(43) Date of publication of application: **27.03.2019**
(21) Application number: 17192040.8
(22) Date of filing: 20.09.2017
(51) Int. Cl.: G01H 3/10, G01H 1/00, G07C 3/14

(54) **A DEVICE FOR MONITORING THE MECHANICAL CONDITION OF A MACHINE**

(71) Applicant: MJB Innovations Limited, 8 Dublin (IE)
(72) Inventor: Fryar, James, Lucan Co. Dublin (IE); Berry, Michael, 3 Dublin (IE); Looney, Brendan, Drimoleage Cork (IE)
(74) Representative: Reedy, Orlaith

(57) **Abstract**

The present invention provides device for attachment to a machine comprising an electric motor for monitoring the mechanical condition of the machine, the device comprising:
a sensor system comprising a plurality of sensors configured to simultaneously detect a plurality of physical properties associated with the machine and with the ambient environment of the machine; and a processor coupled to the plurality of sensors configured to process the data acquired by the sensors to determine the mechanical condition of the machine; and an attachment means coupled to the sensor system for attaching the device to the machine.

## Description

### Field

The present invention relates to a device for monitoring the condition of a machine containing an electric motor. More particularly, the invention relates to a device for monitoring the condition of such a machine by means of a sensor system.

### Background

There are a wide range of machines containing electric motors in common usage including heating, vacuum, air-conditioning, and ventilation systems. As with all mechanical systems, these machines will occasionally fail, with subsequent loss of the services they provide. This loss-of-service can prove costly, in terms of the inconvenience to people relying on the machines, the financial outlay required to repair them in terms of parts and human labour, and failure-of-service penalties for contractors responsible for their operation.

Minimising the probability of machine failure has traditionally involved periodic servicing based on experiential knowledge and mean-time-between-failure data for various components within a machine, as well as in-the-field observations by maintenance personnel. Often these human observations are cursory in nature, with an assessment of a machine condition being made on the basis of vibration levels and temperature determined by physical touch, and/or the sounds being emitted.

More recently, there has been a move towards the use of external and internal sensor systems to monitor various physical attributes of such machines. Ultrasonic receivers, in particular, have become a popular choice for condition monitoring' applications, as they are capable of detecting the high frequency acoustic emissions associated with metal fatigue, brinelling of bearing surfaces, and a lack, or flooding, of lubricant within the machine. Furthermore, the high frequency and hence rapid attenuation as a function of distance of these signals means that there is little interference from the ambient environment in which the monitoring device is placed.

However, condition monitoring systems based on ultrasonic technology tend to be expensive, due to the inherent cost of ultrasonic receivers, as well as the fast data acquisition hardware required to capture such high frequency acoustic signals. Ultrasonic receivers must be carefully positioned to ensure that machine components are being correctly observed. It is for these reasons that, to-date, the majority of monitoring systems have been implemented in industrial settings where the value of the machine assets is extremely high in relation to the cost of the monitoring systems themselves. These industries are also likely to have the experienced personnel, and/or the capital resources necessary for training programmes, to enable the fitting of such systems to the machines requiring monitoring.

There are many managed facilities, such as office buildings, laboratories, hospitals, universities, and schools, where the value of machine assets (such as for example water softeners, water pumps, boilers, vacuum pumps, dehumidifiers, wall mounted air-conditioners, and refrigeration units) is relatively low in comparison to the cost of condition monitoring / preventative maintenance systems. This has meant that traditional periodic servicing and human observation remain the primary methods by which machine monitoring is realised in these environments.

For these types of facilities, a lower-cost alternative solution to ultrasonic monitoring which may be used is automated acoustic monitoring in the audible range, thereby replicating human observations. However, one problem associated with such condition monitoring hardware is to distinguish between sounds and temperatures associated with the machine being monitored and sounds and temperatures due to the surrounding environment, in particular due to the fact that outside of an industrial setting, room temperatures are unlikely to be carefully controlled, or indeed a machine may be located outdoors. A further problem associated with these existing lower-cost alternative condition monitoring solutions is that, given the limited resources available in such facilities and the wide range of possible machines, the installation of such monitoring systems is not always straightforward, nor are they capable of being attached to a machine irrespective of shape, size, and orientation.

It is accordingly an object of the present invention to provide a device which can monitor the condition of a machine which overcomes at least one of the above mentioned problems.

### Summary

The present invention provides a device for attachment to a machine comprising an electric motor for monitoring the mechanical condition of the machine, the device comprising:
a sensor system comprising:
   a plurality of sensors configured to simultaneously detect a plurality of physical properties associated with the machine and with the ambient environment of the machine; and
   a processor coupled to the plurality of sensors configured to process the data acquired by the sensors to determine the mechanical condition of the machine; and
   an attachment means coupled to the sensor system for attaching the device to the machine.

In an embodiment, the plurality of sensors comprise at least one near-field sensor configured to detect a physical property of the machine and at least one corresponding far-field sensor configured to detect the same physical property of the ambient environment.

In an embodiment, the processor is configured to compare the sensor data acquired by the at least one near-field sensor and the sensor data acquired by the at least one corresponding far-field sensor to determine the mechanical condition of the machine.

In an embodiment, the processor is further configured to:
process the data acquired by the sensors to create a standard model of the machine behaviour; and
determine the mechanical condition of the machine by comparing data acquired by the sensors to the standard model of the machine behaviour.

In an embodiment, the plurality of sensors are configured to detect acoustic, vibrational, thermal and magnetic signals associated with the machine.

In an embodiment, the plurality of sensors comprise:
an acoustic sensor for detecting acoustic signals in the human audible range emitted from the machine;
a vibration sensor for detecting the magnitude and direction of vibration of the machine a thermal sensor for detecting the temperature of the machine; and
a magnetometer for detecting the magnetic behaviour of the machine.

In an embodiment, the acoustic sensor comprises:
a first microphone positioned to face towards the machine; and
a second microphone spaced apart from the first microphone, and positioned to face away from the machine.

In an embodiment, the device further comprises:
a first variable gain amplifier circuit coupled to the first microphone; and
a second variable gain amplifier circuit coupled to the second microphone;
wherein each amplifier circuit is configured to amplify the data acquired from its respective microphone for processing by the processor.

In an embodiment, each variable gain amplifier circuit comprises:
an amplifier; and
a feedback circuit coupled to the amplifier for setting the gain of the amplifier.

In an embodiment, each feedback circuit comprises:
a resistive ladder coupled to a multiplexer; wherein the multiplexer is configurable to select one resistor from the resistive ladder to set the gain of the amplifier, and wherein the multiplexer is controlled by the processor.

In an embodiment, the sensor system further comprises a speaker positioned equidistant from the first and the second microphones and coupled to the processor, wherein the speaker is controlled by the processor to emit a tone of a specific frequency to calibrate the first and the second microphones.

In an embodiment, the speaker is positioned along an axis perpendicular to the axis along which the first and second microphones are positioned.

In an embodiment, the thermal sensor comprises:
a first thermometer configured to make contact with the machine; and
a second thermometer configured to make contact with the ambient environment.

In an embodiment, the device further comprises a ferrite cone positioned adjacent to the magnetometer for increasing the magnetic flux detectable by the magnetometer.

In an embodiment, the vibration sensor comprises an accelerometer.

In an embodiment, the sensor system further comprises:
a plurality of analog-to-digital converters, each analog-to-digital converter being coupled between one of the plurality of sensors and the processor.

In an embodiment, the device further comprises a wireless transceiver, wherein the wireless transceiver is configured to receive data from one or more remote sensor systems associated with the machine.

In an embodiment, the remote sensor systems comprise one or one of: thermocouple, passive infra-red, current, humidity, pressure and gas sensors.

In an embodiment, the device further comprises:
an enclosure configured to house the sensor system.

In an embodiment, the enclosure is further configured to house the attachment means.

In an embodiment, the device further comprises a base, and wherein the enclosure comprises a primary housing coupled to the base and a secondary housing embedded within the base, wherein the secondary housing houses the acoustic and vibration sensors such that the acoustic and vibration sensors make contact with a machine to which it is attached; and wherein the attachment means is embedded in the base.

In an embodiment, the base is constructed of a flexible material.

In an embodiment, the enclosure comprises a hardened sealed water-proof case.

In an embodiment, the device further comprises a base, and wherein the sensor system and the attachment means are embedded in the base such that the acoustic and vibration sensors make contact with a machine to which it is attached.

In an embodiment, the base is constructed of a flexible material.

In an embodiment, the attachment means comprises a plurality of magnets.

### Brief Description of the Drawings

The invention will be more clearly understood from the following description of a preferred embodiment thereof which is given by way of example only with reference to the accompanying drawings in which:
Figure 1 shows one embodiment of the main components of the condition monitoring device of the present invention; and
Figure 2 shows a number of different embodiments of how the device of Figure 1 can be configured for attachment to a machine.

### Detailed Description of the Drawings

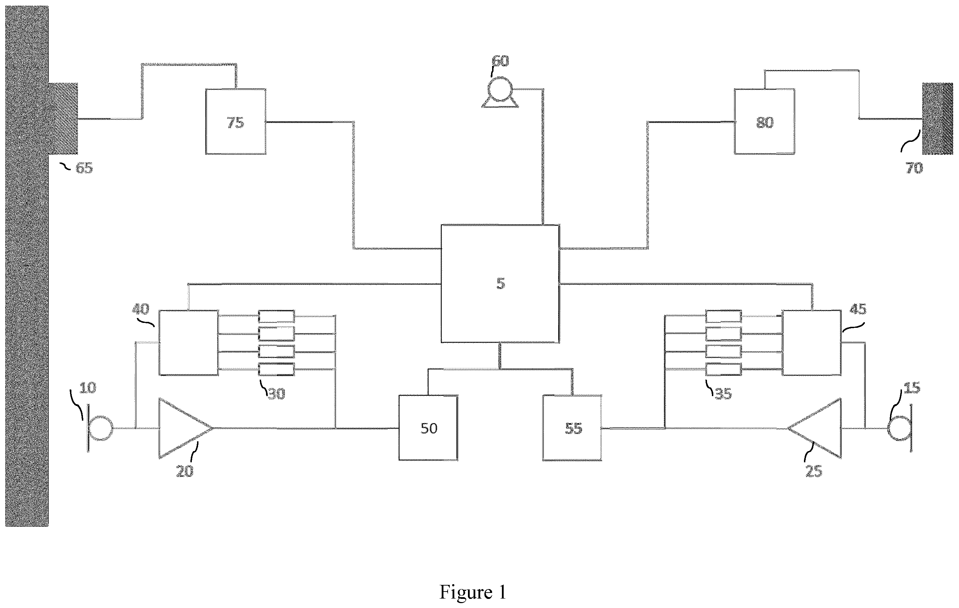

The present invention provides a device attachable to a machine for autonomously monitoring the mechanical condition of the machine. The device comprises sensors configured to simultaneously or concurrently detect a plurality of physical properties associated with the machine and with its surrounding environment, and a processor configured to process the sensor data to determine the mechanical condition of the machine. An attachment means incorporated into the device enables the device to be easily attached to the external surface of any machine irrespective of its shape, size and orientation. The physical properties which the sensors are configured to detect include acoustic, vibration, thermal and magnetic signals. Figure 1 shows one embodiment of the main components of the condition monitoring device of the present invention. It comprises a microprocessor 5, and an acoustic sensor and a thermal sensor coupled to the processor 5.

The acoustic sensor is adapted to capture acoustic signals in the human audible range. In the described embodiment of the invention, the acoustic sensor comprises two, spaced apart microphones 10, 15. The first microphone 10 is located such that it faces towards a machine 90 or unit under test (UUT), and thus acts as a near-field microphone, while the second microphone 15 is located such that it faces away from a UUT and towards the ambient environment, and thus acts as a far-field microphone. This configuration of the microphones 10,15 enables the processor 5 to distinguish between acoustic signals which are emanating from a UUT and acoustic signals associated with background environmental conditions, and thus ensures that an accurate determination of the acoustic emissions related solely to the UUT can be made by the processor 5, thereby indicating the mechanical condition of the UUT.

In order to enable the processor 5 to control the level of amplification of the acoustic signals passed by the two microphones 10,15, each microphone is coupled to a variable gain amplifier 20, 25 controllable by the processor 5. Thus, the first microphone 10 is connected to a first amplifier 20 having a feedback circuit which comprises a resistive ladder 30 coupled to a multiplexer 40, while the second microphone 15 is connected to a second amplifier 25 having a feedback circuit which comprises a resistive ladder 35 coupled to a multiplexer 45. The processor 5 selects one resistor from each resistive ladder 30, 35 to form the amplifier feedback loop in order to set the gain of each amplifier 20, 25 to its required value. This selection is performed by means of a control signal from the processor 5 to the respective multiplexers 40, 45.

A speaker 60 is positioned along an axis at 90 degrees relative to an axis defined by the position of microphone 10 and microphone 15. The speaker 60 is equidistant from both microphones 10, 15 and is connected to the processor 5. The processor 5 is configured to control the speaker 60 to generate an acoustic tone of a specific frequency. This allows the microprocessor 5 to calibrate the relative performance of each microphone 10, 15 so as to enable the differentiation between acoustic signals associated with a UUT and those acoustic signals associated with the ambient environment.

Each amplifier is coupled to an analog-to-digital converter (ADC), in order to convert the analog acoustic data output by each amplifier to digital acoustic data. Thus, amplifier 20 is coupled to ADC 50, while amplifier 25 is coupled to ADC 55.

The thermal sensor comprises two analog thermometers 65, 70. The thermometers are positioned such that thermometer 65 can make contact with the exterior surface of a UUT and thus act as a near-field thermal sensor, while thermometer 70 can make contact with the ambient environment, and thus act as a far-field thermal sensor. This configuration of the thermometers 65, 70 enables the processor 5 to distinguish between the temperature of a UUT and the temperature of the ambient environment, and thus ensures that an accurate determination of the mechanical condition of a UUT can be made by the processor 5.

In one embodiment of the invention, the thermometers 65, 70 make direct contact with the exterior surface of a UUT and the ambient environment respectively. In an alternative embodiment of the invention, each thermometer 65, 70 is positioned on a metal housing comprising thermally conductive material, such that it is their housing which makes contact with the exterior surface of a UUT and the ambient environment respectively.

In order to convert the analog data output by each thermometer to digital data, thermometer 65 is connected to ADC 75, while thermometer 70 is connected to ADC 80.

The output of each of ADCs 50, 55, 75 and 80 is then coupled to the processor 5.

In an alternative embodiment of the invention, the analog thermometers 65, 70 and ADCs 75, 80 are replaced by digital thermometers (not shown). It will be appreciated that in this embodiment, the digital signal from the thermometers is read directly by the processor 5.

In one embodiment of the invention, the magnetic signals emanating from a UUT are detected by a digital magnetometer (not shown) coupled to the microprocessor 5. The digital signal from the magnetometer is read directly by the processor 5. The magnetometer is positioned such that it is close to the UUT.

In one embodiment of the invention, a ferrite cone is used with the magnetometer in order to increase the magnetic flux detected by the magnetometer and allow the microprocessor to detect small changes in the magnetic behaviour of the motor of a UUT or changes in the power drawn by the UUT. The ferrite cone is positioned such that its end of larger area can make contact with a UUT and its end of smaller area makes contact with the magnetometer.

In one embodiment of the invention, a digital accelerometer is used to detect the magnitude and the direction of vibration of the UUT (not shown). The accelerometer is coupled to the processor 5 and can be located at any position within the sensor system.

The processor 5 is configured to analyse the acoustic, vibrational, thermal and magnetic data captured by the microphones, the accelerometer, the thermometers, and the magnetometer in order to determine the mechanical condition of a UUT. This processing includes mathematical, statistical, and heuristic processing of the sensor data.

The device of the invention can be configured in a number of different ways in order to facilitate easy attachment to a UUT.

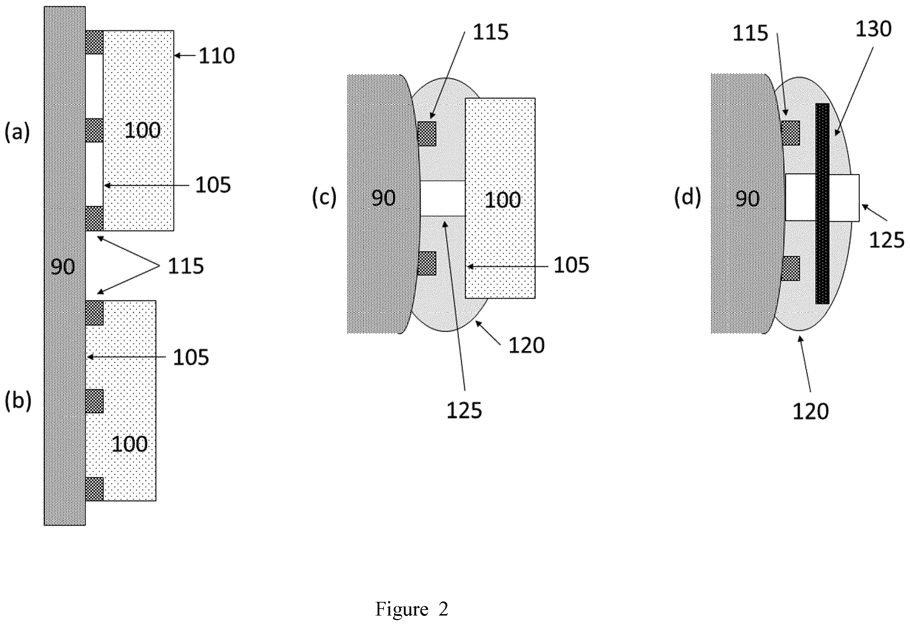

Figure 2a shows an embodiment of one such configuration. In this embodiment, the device further comprises an enclosure which is configured to house the sensor system. The enclosure comprises a primary housing which comprises a substantially rectangular, hardened, sealed water-proof case 100. In one embodiment of the invention, the case 100 is constructed using materials compliant with IP65 environmental ratings, such as for example ABS, polycarbonate, or blends thereof. The case 100 comprises a bottom surface 105 corresponding to a machine proximal end and a top surface 110 corresponding to a machine distal end. In this embodiment, the bottom surface 105 of the case 100 is coupled to the attachment means, which takes the form of a plurality of spaced apart magnets 115.

Figure 2b shows an embodiment of a second configuration. In this embodiment, the magnets 115 are embedded spaced apart within the case 100, such that when the device is attached to a machine 90 both the bottom surface 105 of the case 100 and the magnets 115 are in direct contact with the exterior surface of the machine.

Figure 2c shows an embodiment of a third configuration. In this embodiment, the device further comprises a base 120 which is coupled adjacent to the bottom surface 105 of the case 100. In the embodiment shown, the base 120 is elliptical in shape and is formed of a flexible material, such as for example rubber or silicone.

In this embodiment, the enclosure further comprises a secondary housing 125 which is adapted to house the acoustic and vibration sensors of the sensor system. In the embodiment shown, the secondary housing 125 is substantially cylindrical in shape and extends through the base 120 adjacent its minor axis. The secondary housing 125 comprises a first end which projects from the bottom surface 105 of case 100, and a second end which is adapted to make contact with a machine 90. A plurality of magnets 115 are embedded within the base 120 at opposite sides of its minor axis in a position such that when the device is being attached to a machine 90, the proximity of the magnets to the surface of the machine 90 enables attachment of the device to the machine 90 by means of their magnetic force. In this configuration, when the device is attached to a machine, the base 120 and the secondary housing 125 are in direct contact with the exterior surface of the machine 90.

Figure 2d shows an embodiment of a fourth configuration. This embodiment is similar to the third configuration, in that it comprises a base 120 with a plurality of magnets 115 embedded within the base 120 at opposite sides of its minor axis. It also comprises a secondary housing 125 which extends along the minor axis of the base 120 such that one end of the secondary housing 125 is adapted to make contact with a machine 90. However, this embodiment differs from the third configuration, in that the primary housing is no longer present. Rather, a printed circuit board (PCB) 130 comprising the components of the sensor system is formed of flexible material and embedded within the base 120, such that it extends adjacent to the major axis of the base 120 and passes through the secondary housing 125.

In order to use the device of the present invention to monitor the mechanical condition of a machine comprising a motor, the device must first be attached to the machine (i.e. the UUT). This is achieved by ensuring that the plurality of magnets on the device are in close proximity to the external surface of the machine such that their magnetic force is sufficient to attach the device to the UUT.

Once attached to the machine, the plurality of sensors on the device can simultaneously monitor the acoustic, vibrational, thermal and magnetic signals emanating from the machine.

All analog data acquired from the sensors is converted by the analog-to-digital converters to digital data for processing by the microprocessor. The microprocessor is configured to analyse all of the sensor data to determine the mechanical condition of the UUT. This analysis involves performing separation and extraction of the UUT specific sensor data from the background environmental interference sensor data. This is achieved by comparing data in respect of a specific physical property acquired from a sensor located far-field to that acquired from a sensor located near-field. Thus, acoustic data obtained from the far-field microphone 15 is compared against acoustic data obtained from the near-field microphone 10, in order that the processor can distinguish between acoustic signals emanating from the UUT and acoustic signals associated with background environmental conditions. Similarly, thermal data obtained from the far-field thermometer 70 is compared against thermal data obtained from the near-field thermometer 65, in order that the processor can distinguish between the temperature of the UUT and the temperature of the ambient environment.

The analysis performed by the processor further involves the processing of the acquired sensor data in order to create a standard model of the behaviour of the UUT. This enables the processor to determine if there are any deviations in the operational parameters of the UUT, based on a comparison of the sensor data acquired by the device to the standard model of the UUT. The standard model of the UUT is also used by the processor to determine the frequency of the monitoring of the physical properties by the plurality of sensors of the device.

In one embodiment of the device of the present invention, the device further comprises wireless connections. This enables remote sensor systems to use the device as a communications gateway. These remote sensor systems may accordingly transmit data acquired from remote sensors associated with the UUT to the processor for processing. Examples of remote sensors include thermocouples, passive infra-red, current, humidity, pressure and gas sensors.

There are numerous advantages associated with the device of the present invention. One advantage of the invention is that it provides an apparatus that can be easily mounted on a wide variety of machine shapes and orientations. Furthermore, the apparatus does not require trained staff to carry out the installation.

In addition, the device of the present invention provides a self-contained, deterministic analysis unit which is capable of autonomously making a decision as to the mechanical condition of a UUT. Furthermore, due to the fact that this decision is made locally at the device, the device provides a low data rate of external transmissions by the device. Such an arrangement thus facilitates the deployment of the device in a meshed network.

Another advantage of the invention is that through the use of a dual microphone system, in conjunction with a speaker system for calibration of the microphones, it allows the microprocessor to distinguish between acoustic signals being produced by the monitored machine and signals from the ambient environment in which it is located. The combination of this dual microphone arrangement with a microprocessor which can modify the gain of the amplifiers, ensures that the device can autonomously adjust for different acoustic levels depending on the volume of sound generated by the machine being monitored, whilst simultaneously adjusting for different volume levels present in the ambient environment.

Another advantage of the device of the present invention is that it is capable of determining the difference in temperature between the machine being monitored and the ambient environment. This is particularly important in locations that are not temperature controlled, where large swings in ambient temperature between day and night, for example, may otherwise be misinterpreted as a change in machine temperature.

In addition, the inclusion of a ferrite concentrator above a magnetometer allows the device to monitor changes in the electrical behaviour of a machine being monitored without the need for it to be physically wired to that machine.

Furthermore, due to the fact that the processor can determine the timing of the monitoring of the physical parameters by the plurality of sensors, it enables the power usage of the device to be minimised, and thus the battery life of the device to be maximised.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. A device for attachment to a machine comprising an electric motor for monitoring the mechanical condition of the machine, the device comprising:
a sensor system comprising:
a plurality of sensors configured to simultaneously detect a plurality of physical properties associated with the machine and with the ambient environment of the machine; and
a processor coupled to the plurality of sensors configured to process the data acquired by the sensors to determine the mechanical condition of the machine; and
an attachment means coupled to the sensor system for attaching the device to the machine.

2. The device of Claim 1, wherein the plurality of sensors comprise at least one near-field sensor configured to detect a physical property of the machine and at least one corresponding far-field sensor configured to detect the same physical property of the ambient environment.

3. The device of Claim 2, wherein the processor is configured to compare the sensor data acquired by the at least one near-field sensor and the sensor data acquired by the at least one corresponding far-field sensor to determine the mechanical condition of the machine.

4. The device of any of the preceding claims, wherein the processor is further configured to:
process the data acquired by the sensors to create a standard model of the machine behaviour; and
determine the mechanical condition of the machine by comparing data acquired by the sensors to the standard model of the machine behaviour.

5. The device of any of the preceding claims, wherein the plurality of sensors are configured to detect acoustic, vibrational, thermal and magnetic signals associated with the machine.

6. The device of any of the preceding claims, wherein the plurality of sensors comprise:
an acoustic sensor for detecting acoustic signals in the human audible range emitted from the machine;
a vibration sensor for detecting the magnitude and direction of vibration of the machine a thermal sensor for detecting the temperature of the machine; and
a magnetometer for detecting the magnetic behaviour of the machine.

7. The device of Claim 6, wherein the acoustic sensor comprises:
a first microphone positioned to face towards the machine; and
a second microphone spaced apart from the first microphone, and positioned to face away from the machine.

8. The device of Claim 7, further comprising:
a first variable gain amplifier circuit coupled to the first microphone; and
a second variable gain amplifier circuit coupled to the second microphone;
wherein each amplifier circuit is configured to amplify the data acquired from its respective microphone for processing by the processor.

9. The device of Claim 8, wherein each variable gain amplifier circuit comprises:
an amplifier; and
a feedback circuit coupled to the amplifier for setting the gain of the amplifier.

10. The device of Claim 9, wherein each feedback circuit comprises:
a resistive ladder coupled to a multiplexer; wherein the multiplexer is configurable to select one resistor from the resistive ladder to set the gain of the amplifier, and wherein the multiplexer is controlled by the processor.

11. The device of any of Claims 7 to 10, wherein the sensor system further comprises a speaker positioned equidistant from the first and the second microphones and coupled to the processor, wherein the speaker is controlled by the processor to emit a tone of a specific frequency to calibrate the first and the second microphones.

12. The device of Claim 11, wherein the speaker is positioned along an axis perpendicular to the axis along which the first and second microphones are positioned.

13. The device of any of Claims 6 to 12, wherein the thermal sensor comprises:
a first thermometer configured to make contact with the machine; and
a second thermometer configured to make contact with the ambient environment, and optionally further comprising a ferrite cone positioned adjacent to the magnetometer for increasing the magnetic flux detectable by the magnetometer

14. The device of any of Claims 6 to 13, wherein the vibration sensor comprises an accelerometer.

15. The device of any of the preceding claims, further comprising a wireless transceiver, wherein the wireless transceiver is configured to receive data from one or more remote sensor systems associated with the machine.
